# EUROPÄISCHE PATENTSCHRIFT

(11) **EP 1 902 619 B1**
(45) Veröffentlichungstag und Bekanntmachung des Hinweises auf die Patenterteilung: **22.11.2017**
(21) Anmeldenummer: 07018115.1
(22) Anmeldetag: 14.09.2007
(51) Int. Cl.: A21B 1/10

(54) **Backofen mit Steinplatten spaltfrei angeordnet auf Radiatoreinheit**
Baking oven comprising stone slabs directly placed on radiator unit
Four de cuisson comprenant des dalles placées en contact direct avec radiateur

(30) Priorität: 20.09.2006 DE 202006014575 U
(43) Veröffentlichungstag der Anmeldung: 26.03.2008
(73) Patentinhaber: Kaak Groep B.V., 7061 GA Terborg (NL)
(72) Erfinder: Meyer, Gerd, Dr.-Ing., 21224 Rosengarten-Alvesen (DE)
(74) Vertreter: Glawe, Delfs, Moll

(56) Entgegenhaltungen:
- DE-A1- 3 401 092
- DE-A1- 10 232 997
- DE-C- 300 810
- DE-U1- 20 101 501
- DE-U1- 29 616 692
- DE-U1- 29 720 148
- FR-A- 2 380 682
- FR-A- 2 553 626

## Beschreibung

Die Erfindung betrifft einen Backofen mit einem Backraum, der zur Aufnahme von mindestens einem Rollwagen mit mehrstöckig angeordneten Backblechen ausgebildet ist, in dem mehrere beheizte Radiatoreinheiten horizontal in den Backraum ragend angeordnet sind.

Backöfen der vorgenannten Art dienen in Bäckereien oder Backbetrieben zum Backen von Teiglingen. Die Backöfen weisen üblicherweise mehrere Etagen auf, in denen Backwaren durch die von Radiatoren abgestrahlte Wärme gebacken werden. Diese Backöfen sind meistens dazu eingerichtet, dass Rollwagen mit mehreren in Etagen übereinander angeordneten Backblechen, sogenannte Stikkenwagen, in den Backofen gerollt werden, der Backvorgang durchgeführt wird, und danach der Stikkenwagen mit den nun gebackenen Produkten wieder aus dem Backofen herausbewegt werden. Die Stikkenwagen gibt es in zwei verschiedenen Varianten. Bei der ersten Variante sind in den einzelnen Etagen Aufnahmeelemente für Backbleche angeordnet. In die Aufnahmeelemente werden die Backbleche mit den gebackenen Produkten eingesetzt, und der Stikkenwagen ist bereit zum Einschieben in den Backofen. Die zweite Variante unterscheidet sich von der ersten dadurch, dass sie nicht zur Aufnahme von Backblechen in einzelne Etagen eingerichtet ist, sondern vielmehr Steinplatten etagenweise angeordnet sind (vgl. bspw. FR 2 553 626 A). Auf diesen Steinplatten werden die zu backenden Produkte angeordnet, und dann ist der Stikkenwagen bereit zum Verbringen in den Backofen für den Backvorgang. In dem Backofen sind die Radiatoreinheiten in der Regel als freitragende Platten angeordnet, so dass sie beim Einschieben des Stikkenwagens jeweils in den Bereich zwischen zwei übereinander angeordneten Backblechen bzw. Steinen ragen. Die Radiatoreinheiten wirken damit als Unterhitze für das darüber angeordnete Backblech bzw. die Steinplatte, und als Oberhitze für das darunter befindliche Backblech bzw. die Steinplatte. Nach dem Backvorgang kann der Stikkenwagen wieder aus dem Backofen gerollt werden. Stikkenwagen mit Steinplatten weisen zumal im beladenen Zustand ein verhältnismäßig hohes Gewicht auf, das 200 kg überschreiten kann. Die Wagen sind damit recht schwer zu handhaben beim Verbringen in den Backofen bzw. aus dem Backofen heraus. Beim Herausbewegen des Stikkenwagens am Ende des Backvorgangs tritt zusätzlich die Schwierigkeit auf, dass der gesamte Wagen sehr heiß ist, was die genannten Handhabungsprobleme noch verschärft. Zudem wirken die Steinplatten als Hitzespeicher, und strahlen nach dem Backvorgang in der Backstube Hitze in unerwünschtem Maß ab. Wird der Stikkenwagen erneut beladen und dann wieder in den Backofen eingebracht, so müssen die Steinplatten erneut auf Backtemperatur gebracht werden. Dies erfordert zusätzlichen Energieaufwand.

Der Erfindung liegt die Aufgabe zugrunde, einen Backofen der eingangs genannten Art dahingehend zu verbessern, dass die oben genannten Nachteile verringert werden.

Die erfindungsgemäße Lösung liegt in den Merkmalen des unabhängigen Anspruchs. Vorteilhafte Weiterbildungen sind Gegenstand der abhängigen Ansprüche.

Erfindungsgemäß ist bei einem Backofen mit einem Backraum, der zur Aufnahme von mindestens einem Rollwagen ausgebildet ist, in dem mehrere Radiatoreinheiten horizontal in den Backraum ragend angeordnet sind, vorgesehen, dass auf den Radiatoreinheiten jeweils eine Steinplatte spaltfrei aufliegend angeordnet ist, wobei an der Radiatoreinheit jeweils eine Führungsschiene (4) für die Steinplatte (5) angeordnet ist.

Durch die spaltfreie Anordnung der Steinplatte auf der Radiatoreinheit wird eine bessere Übertragung der von der Radiatoreinheit abgegebenen Hitze auf die Steinplatte erreicht. Widerstände für den Wärmeübergang, wie sie durch einen Spalt unweigerlich auftreten werden, sind auf diese Weise minimiert. Weiter sind Verluste bei der Wärmeübertragung durch Strahlung verringert, wie sie herkömmlicherweise durch Dampf oder Schwaden zwischen der Radiatoreinheit und der an dem Stikkenwagen angeordneten Steinplatte auftreten konnten. Dank der spaltfreien Anordnung der Steinplatte direkt auf der Radiatoreinheit bleibt kein Zwischenraum mehr frei, in dem sich Dampf oder Schwaden ansammeln und die Wärmestrahlung stören könnten. Die spaltfreie Anordnung der Steinplatte auf der Radiatoreinheit bietet weiter den Vorteil, dass zusätzlich zu der Wärmeübertragung durch Strahlung auch eine direkte Wärmeleitung ermöglicht ist. Damit verbessert sich die Wärmeübertragung auf die Steinplatte weiter, wodurch der Wirkungsgrad des Backofens gesteigert wird. Insgesamt ermöglicht es der erfindungsgemäße Backofen, mit einem geringeren Energieeinsatz auszukommen. Weiter ist es dank der erfindungsgemäßen Anordnung der Steinplatte unmittelbar auf der Radiatoreinheit nicht mehr erforderlich, die Steinplatten an dem Stikkenwagen anzuordnen. Die schwierige Handhabung von mit den Steinplatten versehenen Stikkenwagen ist dank der Erfindung nicht mehr erforderlich. Bei der Erfindung verbleiben die Steinplatten in dem Backofen, sie werden anders als bei dem herkömmlichen mit Steinplatten versehenen Stikkenwagen nicht mehr aus dem Backofen am Ende des Backvorgangs entnommen. Die Belastung der Backstube mit der unerwünschten Hitzeabstrahlung des Stikkenwagens sowie der zusätzliche Energieaufwand zum Aufheizen der Steinplatten bei dem nächsten Backvorgang werden damit vermieden. Insgesamt erreicht die Erfindung damit sowohl eine einfache Handhabung wie auch eine größere Energieausnutzung.

Zweckmäßigerweise ist die Steinplatte dünn ausgeführt mit einer Stärke von vorzugsweise 3 bis 8 mm. Mit einer solch dünnen Ausführung wird eine günstige Wärmeleitung durch den Stein erreicht. Die für Strahlungswärme maßgebliche Oberflächentemperatur der Steinplatte ist dann nur geringfügig niedriger als die Temperatur der Radiatoreinheit. Weiter hat die dünne Ausführung der Steinplatte den Vorteil, dass die insgesamt nutzbare Höhe zwischen dem Stein und der darüber angeordneten Radiatoreinheit, welche die Oberhitze liefert, nur minimal beschränkt wird. Dies ermöglicht es, verglichen mit herkömmlichen Öfen mit auf Stikkenwagen eingeschobenen Steinplatten höhere Produkte zu backen. Das Einsatzspektrum des erfindungsgemäßen Backofens erweitert sich dadurch.

Zweckmäßigerweise ist für die Steinplatte ein Verstärkungsrahmen vorgesehen. Damit ist es insbesondere ermöglicht, auch sehr dünne Steinplatten auf den Radiatoreinheiten anzuordnen. Die Stärke der Steinplatten kann dann so gering gewählt sein, dass sie selbst keine ausreichende mechanische Festigkeit mehr aufweist; diese wird durch den Verstärkungsrahmen bereitgestellt. Zweckmäßigerweise ist der Verstärkungsrahmen so geformt, dass sowohl die zu der Radiatoreinheit weisende wie auch die ihr gegenüberliegende Hauptfläche frei von Strukturelementen des Verstärkungsrahmens sind. Damit wird eine optimale Wärmeübertragung erreicht.

Vorzugsweise weist die Steinplatte eine hohe Wärmeleitzahl auf. Unter hoch wird hier ein Wert von 2,0-3,0 realisiert. Damit wird eine gute Wärmeübertragung zwischen der Radiatoreinheit und den zu backenden Produkten erreicht. Die Prozesszeit sowie die Energieeffizienz verbessern sich dadurch.

Vorzugsweise weist die Steinplatte einen Emissionskoeffizienten auf, der mindestens so groß ist wie derjenige der Radiatoreinheit, auf der sie aufliegt. Damit ist sichergestellt, dass die von der Radiatoreinheit abgestrahlte Energie von der Heizplatte auch aufgenommen und wiederum an die zu backenden Produkte abgegeben werden kann. Energieverluste durch die Steinplatte sind dadurch weitestgehend minimiert.

Erfindungsgemäße sind an den Radiatoreinheiten Führungsschienen für die Steinplatten angeordnet. Sie ermöglichen es, die Steinplatte von der ihr jeweils zugeordneten Radiatoreinheit, auf der sie aufliegt, abzunehmen und aus dem Backofen zu entnehmen. Reinigung sowie ggf. erforderlicher Ersatz kann auf diese Weise leicht durchgeführt werden. Vorzugsweise sind die Führungsschienen so gestaltet, dass sie an ihrem Vorderende einen öffenbaren Verschluss aufweisen. Im Normalbetrieb ist der Verschluss geschlossen, so dass die Steinplatte sicher in ihrer Position unmittelbar aufliegend auf der ihr zugeordneten Radiatoreinheit gehaltert ist. Zum Wechseln der Steinplatte braucht der Verschluss nur in seine geöffnete Position bewegt zu werden, um die Steinplatte leicht entnehmen und austauschen zu können.

Die Steinplatte kann einteilig ausgeführt sein. Insbesondere bei größeren Backöfen, die zur Aufnahme von mehr als einem Stikkenwagen ausgebildet sind, ist eine mehrteilige Ausführung der Steinplatte zweckmäßig. Damit können Steinplatten in handelsüblichen Größen auch für große Backöfen verwendet werden. Bei einer besonders bewährten alternativen Ausführungsform ist hingegen vorgesehen, dass die Steinplatte fugenlos ausgeführt ist. Dies ermöglicht auch bei größeren Backöfen eine durchgehende Ausgestaltung der Steinplatte. Die Gleichmäßigkeit der Wärmeübertragung und damit des Backergebnisses wird dadurch optimiert. Dies gilt insbesondere bei einer Länge der Steinplatten von mehr als 1,5 m.

Vorzugsweise ist weiter vorgesehen, dass die Radiatoreinheiten an eine Verrohrung zur Versorgung mit Thermoöl angeordnet sind, wobei die Verrohrung mindestens zwei Zufuhrleitungen für von einer Wärmequelle erhitztes Thermoöl aufweist. Dank einer solchen parallelen Zuführung von erhitztem Thermoöl wird erreicht, dass der Temperaturabfall in den einzelnen Radiatoreinheiten geringer ist verglichen mit einer herkömmlichen Anordnung, bei der die Radiatoreinheiten in Reihe geschaltet sind. Die von Steinplatten auf die zu backenden Produkte abgestrahlte Hitze wird durch einen solchen parallelen Anschluss über die gesamte zum Backen zur Verfügung stehende Fläche des Ofens gesehen noch gleichmäßiger. Die Vorzüge der spaltfreien Anordnung der Spaltplatte werden dadurch noch wirksamer.

Die Erfindung wird nachfolgend unter Bezugnahme auf die beigefügte Zeichnung erläutert, in der ein vorteilhaftes Ausführungsbeispiel dargestellt ist. Es zeigen:
- Fig. 1: eine schematische Seitenansicht eines Ausführungsbeispiels bei einem erfindungsgemäßen Backofen mit einer Wärmequelle;
- Fig. 2: eine Aufsicht auf den Backofen gemäß Fig. 1; und
- Fig. 3: eine vergrößerte Teilansicht eines mit III markierten Ausschnitts aus Fig. 1.

Die Erfindung wird nachfolgend anhand einer mit Thermoöl beheizten Backanlage erläutert. Sie umfasst einen Backofen 1 und eine Wärmequelle 9.

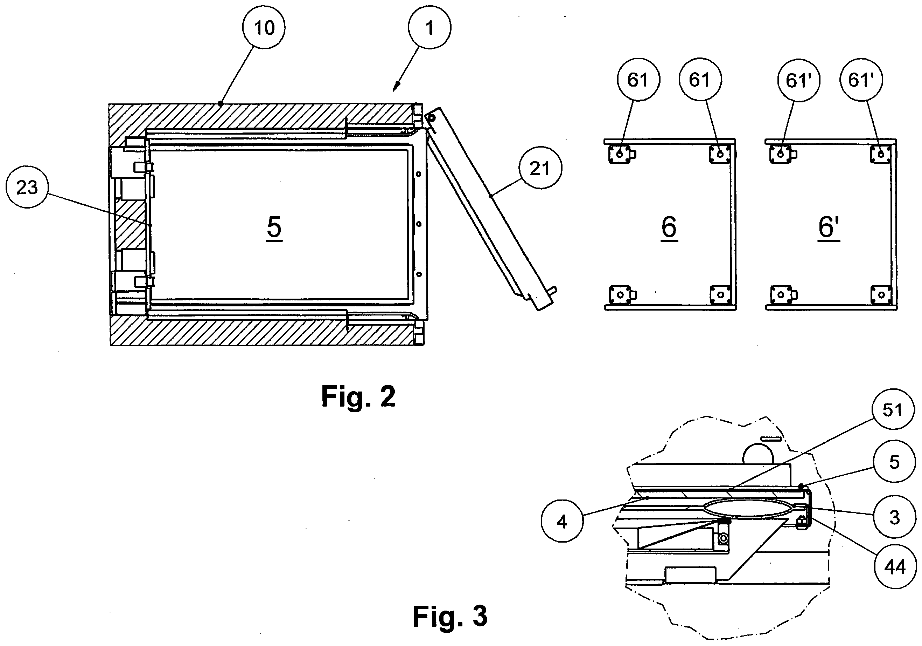

Der Backofen 1 besteht aus einer Ummauerung 10, die einen Backraum 20 umgibt. Der Backraum 20 ist an fünf Seiten, nämlich oben und unten, sowie an drei Hauptseiten von der Ummauerung 10 umschlossen. An der verbleibenden vierten Seite ist eine Backofentür 21 vorgesehen. Sie ist so bemessen, dass sie den Zugang zum Backraum 20 nahezu über dessen gesamten Querschnitt freigibt. Breite wie auch Höhe der von der Backofentür 21 im geöffneten Zustand freigegebenen Öffnung sind ausreichend für den Durchgang von Rollenwagen 6, 6', seien es Rollenwagen mit Backblechen oder mit Steinplatten. Aus der in Fig. 2 gegebenen Darstellung ist ersichtlich, wie zwei Rollwagen 6, 6' in den Backraum 20 eingeschoben werden. Die Wagen befinden sich in Einschubrichtung gesehen hintereinander, was bedeutet, dass sie nur nacheinander oder vorzugsweise gemeinsam eingeschoben und entnommen werden können. Handelt es sich bei beiden Rollwagen 6, 6' um Stikkenwagen mit Steinplatten, so ergibt sich durch die gekoppelte Anordnung im beladenen Zustand ein Gesamtgewicht zwischen 400 und 500 kg.

In dem Backraum 20 sind mehrere horizontal frei in den Backraum 20 ragende Radiatoreinheiten 3 angeordnet. Sie sind lediglich an einer Seite, nämlich an der Rückseite 23 des Backraums 20 auf eine nicht näher dargestellte Weise eingespannt. Die Radiatoreinheiten 3 weisen einen bestimmten Abstand von den Seitenwänden 22 des Backraums 20 auf. Der Abstand ist so bemessen, dass der Raum zum Durchgang von Vertikalstreben 61, 61' der in dem Backraum 20 zu schiebenden Rollwagen 6, 6' ausreicht. Damit können die Rollwagen ganz in den Backraum 20 eingeschoben werden. Die Radiatoreinheiten 3 sind an ihrem hinteren Ende über eine Verrohrung 90 mit der Wärmequelle 9 verbunden. Die Verrohrung 90 umfasst eine Zulaufleitung 91 für Thermoöl und eine Rücklaufleitung 92. Zusätzlich umfasst die Verrohrung 90 eine zweite Zulaufleitung 93, die parallel zu der Zulaufleitung 91 Thermoöl an die Radiatoreinheiten 3 heranführt. Es können auch noch weitere zusätzliche Zulaufleitungen 93' vorgesehen sein. Die Anordnung zusätzlicher, parallel geschalteter Zufuhrleitungen 93 hat den Vorteil, dass die einzelnen etagenmäßig übereinander angeordneten Radiatoreinheiten 3 gleichmäßig mit von der Wärmequelle 9 erhitztem Thermoöl versorgt werden. Temperaturunterschiede, wie sie herkömmlicherweise bei in Reihe geschalteter Anordnung der Radiatoreinheiten 3 auftreten können, werden damit vermieden.

An den Radiatoreinheiten 3 sind Führungsschienen 4 für Steinplatten 5 angeordnet. Sie sind so ausgebildet, dass die Steinplatten 5 unmittelbar, d. h. ohne Spalt auf der ihr jeweils zugeordneten Radiatoreinheit 3 aufliegt. Durch die spaltfreie Anordnung der Steinplatte auf der Radiatoreinheit 3 ist ein optimaler Kontakt zur Wärmeübertragung erreicht. Die Steinplatte 5 kann optional einen Verstärkungsrahmen 51 aufweisen. Er ist zweckmäßigerweise so ausgebildet, dass die Steinplatte 5 in den Verstärkungsrahmen 51 eingebettet ist. Dabei bleibt die Unterseite wie auch die Oberseite der Steinplatte 5 möglichst frei von Strukturelementen, um eine ungehinderte Abführung von Verlustwärme zu erlauben. An ihrer zur Backofentür 21 weisenden Endseite haben die Führungsschienen 4 einen öffenbaren Verschluss 44. Der Verschluss umfasst ein mit einer Schraube fixiertes Sicherungselement. Er ist dazu ausgebildet, die Steinplatten im Normalbetrieb an ihrer vorgesehenen Position unmittelbar auf der Radiatoreinheit 3 zu halten, während in einem geöffneten Zustand die Steinplatte 5, ggf. zusammen mit ihrem Verstärkungsrahmen 51, nach vorne von der Radiatoreinheit 3 abgezogen werden kann. Dies ermöglicht es, Reinigungs- oder Wartungsarbeiten an demontierter Steinplatte 5 auszuführen.

Bei dem dargestellten Ausführungsbeispiel besteht die Steinplatte 5 vorzugsweise nicht aus einem herkömmlichen, vollen Steinmaterial, sondern ist aus glasfaserverstärktem Pressmaterial hergestellt. Dies bietet den Vorteil einer Einstellbarkeit des thermischen Expansionskoeffizientens auf den Wert des Materials, aus dem die Radiatoreinheiten 3 bestehen, insbesondere Stahl. ausgerichteten Expansionskoeffizienten. Ein weiterer Vorteil dieser Ausführungsform ist, dass Sondergrößen leicht zu fertigen sind. Unter Sondergrößen werden hier die Größen verstanden, mindestens eine Länge von 100 cm aufweist. Dank der Verwendung von Pressmaterial können auch solche Sondergrößen fugenlos hergestellt werden.

Das für die Steinplatte verwendete Material weist eine hohe Wärmeleitzahl auf, die etwa in der Gegend von K = 2,0-3,0. Es weist weiter einen Emissionskoeffizienten auf, der größer ist als derjenige der Radiatoreinheiten 3.

Zum Betrieb des Ofens werden die Rollwagen 6, 6' mit den zu backenden Produkten in die Nähe der Tür 21 des Backraums 20 gefahren. Von dort kann manuell oder mittels Geräteunterstützung, bspw. eine Einschießvorrichtung, das zu backende Gut entnommen werden, um auf die Steinplatte 5 gelegt zu werden. Die zu backenden Produkte können dann über einen an sich frei wählbaren Zeitraum gebacken werden.

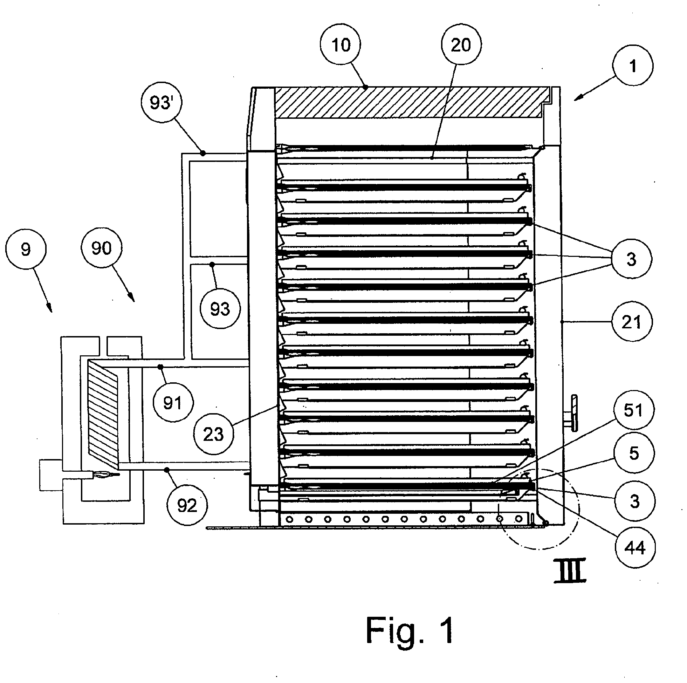

Wie aus den Fig. 1 und 3 zu ersehen ist, wirken die einzelnen Radiatoreinheiten 3 sowohl als Oberhitze wie auch als Unterhitze. Als Unterhitze fungieren sie, indem sie über die unmittelbar aufliegende Steinplatte 5 eine Erwärmung der darauf befindlichen Gegenstände erreichen.

Die zu backenden Produkte brauchen lediglich auf den Steinplatten 5 platziert zu werden. Dank der dünnen Ausführung der Steinplatte (Stärke ca. 4 mm) erfolgt eine sehr schnelle Aufheizung und damit Wärmeabstrahlung von der Steinplatte 5 auf die zu backenden Produkte. Zudem ermöglicht die einteilige Ausführung der Steinplatte 5 dank ihrer Beschaffenheit eine fugenlose und damit gleichmäßige Wärmeleitung von der Radiatoreinheit 3 zu den zu backenden Produkten. Da die Steinplatte 5 direkt auf der Radiatoreinheit 3 aufliegt, behindert keine Luftschicht den Wärmeübergang zwischen der Radiatoreinheit 3 und der Steinplatte 5. Mangels eines Zwischenraums kann sich auch keine Dampfansammlung bilden, welche die Abstrahlung der Radiatoreinheit 3 auf die Steinplatte 5 verhindern würde. - Es kann aber auch vorgesehen sein, dass die zu backenden Produkte nicht direkt auf den Steinplatten 5 angeordnet werden, sondern auf Backblechen, die etagenweise auf einem zweiten Stikkerwagen angeordnet sind. Die Backbleche sind jeweils auf einer solchen Höhe angeordnet, dass sie zwischen den Radiatoreinheiten 3 mit den Steinplatten 5 zu liegen kommen, vorzugsweise nur etwas über den Steinplatten 5. Jede Radiatoreinheit 3 bildet damit eine Oberhitze für die auf den Backblechen befindlichen zu backenden Produkte.

## Patentansprüche

1. Backofen mit einem Backraum (20), der zur Aufnahme von mindestens einem Rollwagen ausgebildet ist, in dem mehrere Radiatoreinheiten (3) horizontal in den Backraum (20) ragend angeordnet sind, wobei auf den Radiatoreinheiten (3) jeweils eine Steinplatte (5) spaltfrei aufliegend angeordnet ist, **dadurch gekennzeichnet, dass** an der Radiatoreinheit jeweils eine Führungsschiene (4) für die Steinplatte (5) angeordnet ist.

2. Backofen nach Anspruch 1,
**dadurch gekennzeichnet, dass**
die Steinplatte (5) dünn mit einer Stärke von vorzugsweise 3 bis 8 mm ausgebildet ist.

3. Backofen nach Anspruch 1 oder 2,
**dadurch gekennzeichnet, dass**
ein Verstärkungsrahmen für die Steinplatte (5) vorgesehen ist.

4. Backofen nach einem der vorangehenden Ansprüche,
**dadurch gekennzeichnet, dass**
die Steinplatte (5) eine hohe Wärmeleitzahl aufweist,
vorzugsweise mindestens 2,0-3,0.

5. Backofen nach einem der vorangehenden Ansprüche,
**dadurch gekennzeichnet, dass**
die Steinplatte (5) einen Emissionskoeffizienten aufweist, der mindestens so groß ist wie derjenige der Radiatoreinheit (3), auf der sie aufliegt.

6. Backofen nach einem der vorhergehenden Ansprüche 1,
**dadurch gekennzeichnet, dass**
die Führungsschienen (4) ein öffenbares Vorderende zum Entnehmen der Steinplatte (5) aufweisen.

7. Backofen nach einem der vorangehenden Ansprüche,
**dadurch gekennzeichnet, dass**
die Steinplatte (5) mehrteilig ausgeführt ist.

8. Backofen nach Anspruch 7,
**dadurch gekennzeichnet, dass**
die Steinplatte (5) fugenlos ausgeführt ist, und vorzugsweise eine Länge von über 1,2 m aufweist.

9. Backofen nach einem der vorangehenden Ansprüche,
**dadurch gekennzeichnet, dass**
die Radiatoreinheiten (3) an eine Verrohrung (90) für Thermoöl angeschlossen sind, und mindestens zwei parallel angeordnete Hinläufe (91, 93) und mindestens ein Rücklauf (92) für das Thermoöl vorgesehen sind.

## Claims

1. Baking oven having a baking chamber (20) that is designed to receive at least one trolley, in which multiple radiator units (3) are arranged so as to project horizontally into the baking chamber (20), wherein
a stone slab (5) is laid directly onto each of the radiator units (3),
**characterized in that**
a guide rail (4) for the stone slab (5) is arranged on each radiator unit.

2. Baking oven according to Claim 1,
**characterized in that**
the stone slab (5) is thin, having a thickness of preferably 3 to 8 mm.

3. Baking oven according to Claim 1 or 2,
**characterized in that**
a strengthening frame is provided for the stone slab (5).

4. Baking oven according to one of the preceding claims,
**characterized in that**
the stone slab (5) has a high coefficient of thermal conductivity, preferably at least 2.0-3.0.

5. Baking oven according to one of the preceding claims,
**characterized in that**
the stone slab (5) has an emission coefficient that is at least as great as that of the radiator unit (3) on which it rests.

6. Baking oven according to one of the preceding Claims 1,
**characterized in that**
the guide rails (4) have a front end that can be opened in order to remove the stone slab (5).

7. Baking oven according to one of the preceding claims,
**characterized in that**
the stone slab (5) is in multiple parts.

8. Baking oven according to Claim 7,
**characterized in that**
the stone slab (5) is produced without joins and preferably has a length of greater than 1.2 m.

9. Baking oven according to one of the preceding claims,
**characterized in that**
the radiator units (3) are connected to piping (90) for thermal oil, and there are provided at least two parallel outward branches (91, 93) and at least one return branch (92) for the thermal oil.

## Revendications

1. Four de cuisson comprenant une chambre de cuisson (20) qui est réalisée pour recevoir au moins un chariot roulant dans lequel sont disposées plusieurs unités de radiateur (3) faisant saillie horizontalement dans la chambre de cuisson (20), une plaque en pierre (5) étant à chaque fois disposée de manière à reposer sans interstice sur les unités de radiateur (3),
**caractérisé en ce**
**qu'**un rail de guidage (4) pour la plaque en pierre (5) est à chaque fois disposé sur l'unité de radiateur.

2. Four de cuisson selon la revendication 1,
**caractérisé en ce que**
la plaque en pierre (5) est réalisée sous forme mince avec de préférence une épaisseur de 3 à 8 mm.

3. Four de cuisson selon la revendication 1 ou 2,
**caractérisé en ce**
**qu'**un cadre de renforcement est prévu pour la plaque en pierre (5).

4. Four de cuisson selon l'une quelconque des revendications précédentes,
**caractérisé en ce que** la plaque en pierre (5) présente un indice de conductivité thermique élevé, de préférence d'au moins 2,0-3,0.

5. Four de cuisson selon l'une quelconque des revendications précédentes,
**caractérisé en ce que**
la plaque en pierre (5) présente un coefficient d'émission qui est au moins égal à celui de l'unité de radiateur (3) sur laquelle elle repose.

6. Four de cuisson selon l'une quelconque des revendications précédentes 1,
**caractérisé en ce que**
les rails de guidage (4) présentent une extrémité avant pouvant être ouverte pour enlever la plaque en pierre (5).

7. Four de cuisson selon l'une quelconque des revendications précédentes,
**caractérisé en ce que**
la plaque en pierre (5) est réalisée en plusieurs parties.

8. Four de cuisson selon la revendication 7,
**caractérisé en ce que**
la plaque en pierre (5) est réalisée sans joint et présente de préférence une longueur supérieure à 1,2 m.

9. Four de cuisson selon l'une quelconque des revendications précédentes,
**caractérisé en ce que**
les unités de radiateur (3) sont raccordées à un système de tuyaux (90) pour de l'huile thermique et au moins deux entrées (91, 93) disposées parallèlement et au moins un retour (92) sont prévus pour l'huile thermique.
